# EUROPÄISCHE PATENTSCHRIFT

(11) **EP 0 603 468 B1**
(45) Veröffentlichungstag und Bekanntmachung des Hinweises auf die Patenterteilung: **28.05.1997**
(21) Anmeldenummer: 93114323.4
(22) Anmeldetag: 07.09.1993
(51) Int. Cl.: B61B 10/02, B65G 19/02

(54) **Hängeförderanlage mit einer Ausschiebevorrichtung mit Überlastfunktion**
Overhead conveyor system having a push-out device with overload function
Système de convoyeur suspendu équipé d'un dispositif d'expulsion avec fonction à surcharge

(30) Priorität: 24.12.1992 DE 4244152
(43) Veröffentlichungstag der Anmeldung: 29.06.1994
(73) Patentinhaber: DÜRKOPP ADLER AKTIENGESELLSCHAFT, D-33602 Bielefeld (DE)
(72) Erfinder: Janzen, Paul, D 33609 Bielefeld (DE); Sühling, Winfried, D 33615 Bielefed (DE); Schilling, Gerhard, D 33604 Bielefeld (DE)
(74) Vertreter: Rehmann, Klaus-Thorsten, Dipl.-Ing.

(56) Entgegenhaltungen:
- EP-A- 0 395 882
- DE-A- 2 359 267
- DE-U- 9 202 325
- US-A- 4 428 299

## Beschreibung

Die Erfindung betrifft eine Hängeförderanlage nach dem Oberbegriff des Anspruchs 1.

Insbesondere in der Bekleidungsindustrie werden die auf Kleiderbügel hängenden Kleidungsstücke zum Zwecke des Kommisionierens oder des Abtransports in die Tragstange der einspurigen Förderwagen, sogenannten Trolleys, einer Hängeförderanlage eingehängt. Die auf Schienen laufenden Trolleys werden über jeweils auf die vordere Laufrolle einwirkende Mitnehmer geschoben, die an einem Antriebselement ausgebildet sind, das an der oberhalb der Laufschiene angeordneten Antriebskette befestigt ist.

Eine solche Hängeförderanlage weist unterschiedliche Schienenstränge auf, die über Weichen miteinander verbunden werden. An diesen Weichen kann ein Trolley jeweils aus dem aktuellen in einen abzweigenden Förderstrang ausgegleist werden. Hierzu ist ein Ausschiebeelement ebenfalls an der Antriebskette befestigt und so angeordnet, daß es hinter jedem Trolley wirksam ist. Wenn ein Trolley ausgegleist wird, gerät das Antriebselement zu dem Zeitpunkt außer Eingriff mit der vorderen Laufrolle, wenn diese den aktuellen Schienenstrang verlassen hat. Der dann ausrollende Trolley verlangsamt seine Geschwindigkeit und der hinter dem Trolley angeordnete Ausschieber, der mit unveränderter Umlaufgeschwindigkeit der Antriebskette weiter angetrieben wird, gelangt zur Einwirkung auf die hintere, sich noch im aktuellen förderstrang befindliche Laufrolle des Trolleys. Dadurch wird der Trolley mit der ursprünglichen Antriebsgeschwindigkeit weiter in den neuen Förderstrang ausgeschoben.

Damit der Trolley sicher ausgeschoben werden kann, muß die Klaue des Ausschiebers entgegen der Transportrichtung starr sein. Um jedoch auch einen Trolley zwischen die einzelnen Ausschieber eingleisen zu können, ist die Klaue in Transportrichtung schwenkbar am Ausschieber angeordnet, so daß sie durch einen von hinten kommenden Trolley angehoben wird.
Hierzu ist es bekannt, die aus Kunststoff ausgebildete Klaue mittels eines Bolzens, der horizontal und außermittig durch ein Ende des Mitnehmers hindurchgesteckt wird, an dem Ausschiebeelement zu befestigen.

Beim Ausgleisen sind zwei grundsätzliche, den Förderbetrieb nachhaltig störende Kollisionsfälle denkbar.
Im ersten Fall springt die Weiche, nachdem sie von der vorderen Laufrolle des Förderwagens passiert wurde, zurück, so daß die vordere Rolle ausgegleist im neuen Förderstrang und die hintere Rolle nicht ausgegleist im alten Förderstrang verbleibend läuft. Da die Tragbügel der Förderwagen drehbar in den die Laufrollen aufnehmenden Tragwinkeln gelagert sind, schiebt der Ausschieber den sich nun querstellenden Trolley so weit weiter, bis der parallele Abstand der vorderen Rolle und der hinteren Rolle die Länge des Tragbügels erreicht hat. Eine weitere Transportbewegung ist nicht möglich. Wenn die Förderkette dann nicht abgeschaltet wird, tritt Materialbruch ein.
Im zweiten Fall wird der Förderwagen ordnungsgemäß ausgegleist, die neue Förderstrecke ist jedoch, aus welchen Gründen auch immer, besetzt und der Trolley läuft auf ein Hindernis. Wenn das Hindernis so dicht am aktuellen Förderstrang liegt, daß der Trolley nicht vollständig in den neuen Förderstrang einläuft, kann er vom Ausschieber nicht weiter transportiert werden und auch dann kommt es, wenn der Antrieb nicht sofort ausgeschaltet wird, unweigerlich zu einem Materialbruch.

Der Erfindung liegt daher die Aufgabe zugrunde, die Hängeförderanlage so fortzubilden, daß für den Fall des Blockierens beim Ausgleisen eines Trolleys eine Beschädigung der Förderanlage oder ihrer einzelnen Bauteile wirksam ausgeschlossen ist.

Die Lösung der Aufgabe erfolgt bei einer gattungsgemäßen Hängeförderanlage durch die kennzeichnenden Merkmale des Anspruchs 1.

Vorteilhafte Ausgestaltungen der Erfindung geben die Unteransprüche wieder.

Dadurch, daß die Klaue der Ausschiebevorrichtung so ausgestaltet ist, daß sie entgegen der Transportrichtung eine dritte hochgeschwenkte Position einnehmen kann, kann die Klaue direkt durch den an der Weiterfahrt gehinderten Trolley weggeschwenkt werden und die Ausschiebevorrichtung den blockierten Trolley passieren.
Wenn das Verschwenken in die dritte Position gegen die Kraft einer Feder erfolgt, ist durch eine geeignete Federauswahl sichergestellt, daß erst bei einer Krafteinwirkung, wie sie definitiv nur durch einen blockierten Trolley hervorgerufen werden kann, das Wegschwenken der Klaue erfolgt.

Mit der mechanischen Einrichtung zur Sichtbarmachung der nach oben geschwenkten Klaue gemäß Anspruch 3 ist es für die Bedienperson möglich, direkt zu erkennen, an welcher Stelle es Probleme beim Ausgleisen gegeben hat. Außerdem kann durch die nach außen geschwenkte Klappe ein Notausschalter betätigt werden, so daß die Förderanlage unmittelbar nach der Blockade gestoppt werden kann. Die nach außen geschwenkte Klappe dient dem Wartungspersonal dann zum einfachen Auffinden der fehlerhaften Weiche.

Wenn in der Nähe der Weiche parallel zum Förderstrang eine optische Überwachungseinrichtung so ausgerichtet wird, daß die nach außen geschwenkte Klappe einer Ausschiebevorrichtung den Lichtstrahl der Überwachungseinrichtung unterbricht, kann ein automatisches Signal an die Steuereinheit der Förderanlage gegeben werden, das zum Stillsetzen der Antriebskette verwendet werden kann.

Anhand einer Zeichnung soll die Erfindung nachfolgend näher erläutert werden.
Es zeigt:
- Fig. 1: die Teilansicht einer Hängeförderanlage als Prinzipskizze,
- Fig. 2: die Darstellung von durch eine Weiche verbundenem Haupt- und Nebenförderstrang,
- Fig. 3: den Ausschieber in Teilschnitt,
- Fig. 4: die Draufsicht des Ausschieber gemäß Fig. 3,
- Fig. 5: die Seitenansicht des Ausschiebers aus Fig. 3,
- Fig. 6: den Ausschieber gemäß Fig. 3 mit nach oben geschwenkter Klaue,
- Fig. 7: den Ausschieber gemäß Fig. 4 mit nach oben geschwenkter Klaue,
- Fig. 8: den Ausschieber gemäß Fig. 5 mit nach oben geschwenkter Klaue,
- Fig. 9: die perspektivische Darstellung eines Einzelteils aus Fig. 4,

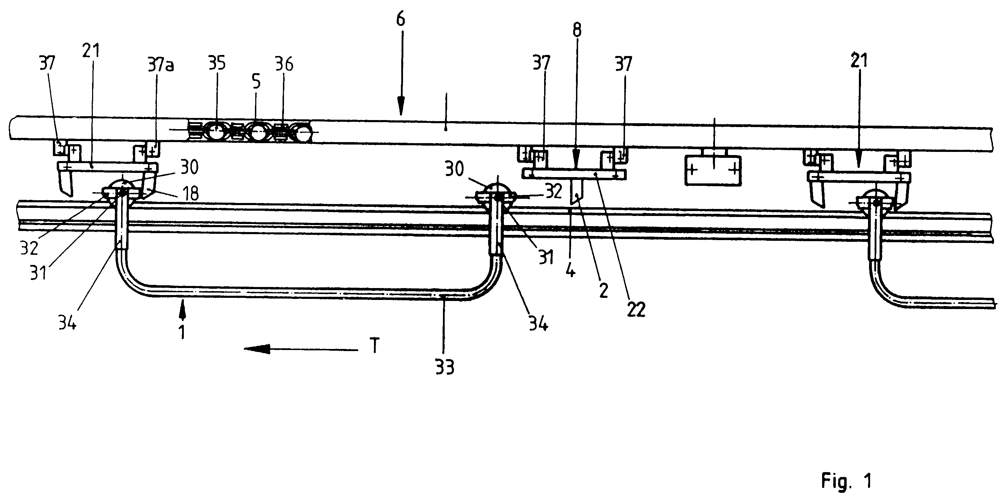

Fig. 1 zeigt den prinzipiellen Aufbau einer Hängeförderanlage.
Die Förderwagen 1 bestehen im wesentlichen aus der U-förmig gebogenen Tragstange 33, die an ihren beiden Enden drehbar in Laufrollenträgern 34 gelagert ist. Jeder Laufrollenträger 34 trägt eine Achse 31 einer vorderen bzw. hinteren Laufrolle 30. Die Laufrolle 30 umgreifend ist eine Stoßkappe 32 vorgesehen, auf die der vorzugsweise aus Kunststoff gefertigte Mitnehmer 18 des Antriebselementes 21 einwirkt. Laufrollenträger 24, Laufrollen 30 und Stoßkappen 32 sind für das vordere und das hintere Ende des Förderwagens 1 identisch ausgebildet und in der Figur deshalb mit denselben Positionsziffern versehen.

Die Hängeförderanlage besteht im wesentlichen aus dem Kettenkanal 6, mit der darin umlaufend durch einen nicht näher dargestellten Getriebemotor stetig angetriebenen Antriebskette 5 und der ein nicht weiter dargestelltes Profil aufweisenden Laufschiene 4. Die Laufrollen 30 sind mit einer zentrischen Umfangsnut (nicht gezeigt) versehen, so daß sie in bekannter Weise auf dem Profil der Laufschiene 4 geführt rollen. Laufschiene 4, Antriebskette 5 und Kettenkanal 6 bilden den Förderstrang. Die von einem Motor M stetig umlaufend angetriebene Antriebskette 5 ist raumgelenkig, so daß sowohl Steigungs- als auch Gefällefahrten mit dem Förderwagen 1 durchgeführt werden können, und der Förderstrang auch einen bogenförmigen Verlauf einnehmen kann. Die Antriebskette 5 ist im Kettenkanal 6 mittels Trag- und Stützrollen 35, 36 geführt.
An der Antriebskette 5 ist jeweils im Bereich zweier benachbarter Tragrollen 35 an nach unten aus dem Kettenkanal 6 herausragenden Tragwinkeln 37 ein Antriebselement 21 oder der Ausschieber 8 befestigt.
Antriebselement 21 und Ausschieber 8 sind im Wechsel mit der Antriebskette 5 verbunden, wobei der am Antriebselement 21 vorgesehene Mitnehmer 18 auf die Stoßkappe 32 der im Bezug auf die Transportrichtung T gesehen vorderen Laufrolle 30 des Förderwagens 1 einwirkt und diesen mit der Geschwindigkeit der umlaufenden Antriebskette 5 schiebt.

Im horizontalen Abstand zu der hinteren Laufrolle 30 des Förderwagens 1 ist der Ausschieber 8 angeordnet.
Der Ausschieber 8 besteht im wesentlichen aus der um einen Bolzen 10 schwenkbar gelagerten Klaue 2, dem Trägerelement 22, dem auf dem Trägerelement 22 gegen die Kraft einer Feder 12 schwenkbar befestigten Blech 9, und dem durch die nach oben schwenkende Klaue 2 nach außen schwenkbaren Blech 11, an dem eine Klappe 13 befestigt ist.

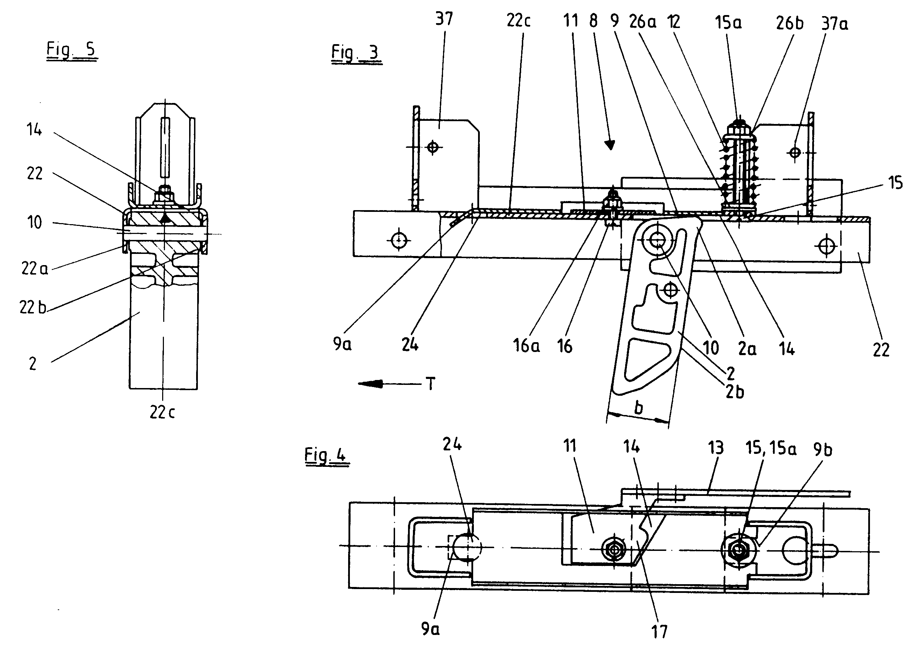

Das Trägerelement 22 weist ein im Querschnitt U-förmiges Profil auf (Fig. 5). In einer in den Seitenwangen 22a, 22b vorgesehenen Bohrung 23 ist die Klaue 2 über den Bolzen 10 schwenkbar angelenkt. Die Rückenfläche 22c des Trägerelements 22 weist oberhalb der Klaue 2 eine über die vollständige Breite reichende Ausnehmung 14 auf. Die Länge der Ausnehmung ist etwas größer bemessen als die Breite b des Mitnehmers 2. Über der Rückenfläche 22c des Ausschiebers 8 ist zwischen dem vorderen und hinteren Tragwinkel 37, 37a ein Blech 9 schwenkbar befestigt. Hierzu weist das Blech 9 an seinem vorderen Ende eine nach unten umgebogene Zunge 9a auf, die in ein in der Rückenfläche 22c vorgesehenes Loch 24 eingreift. Das vordere Ende des Blechs 9 ist mittig mit einem Schlitz 9b versehen.
Hinter der Ausnehmung 14 (in der Figur rechts) ist in der Rückenfläche 22c mittig ein Bohrloch 25 vorgesehen, in das eine Schraube 15 von unten hindurchgesteckt ist, die in den Schlitz 9b des Blechs 9 eingreift. Über dem Blech 9 sind auf der Schraube 15 zwei Scheiben 26a, 26b vorgesehen, die zwischen sich eine Druckfeder 12 aufnehmen, die über eine auf die Schraube 15 aufgedrehte Mutter 15a vorgespannt wird. Gegen die Kraft dieser Druckfeder 12 kann das Blech 9 nach obem geschwenkt werden. Der Schwenkpunkt befindet sich dabei in Höhe der Zunge 9a. Vor der Ausnehmung 14 ist über eine Schraubverbindung 16, 16a auf der Rückenfläche 22c des Trägerelements 22 ein eine Klappe 13 tragendes Blech 11 horizontal schwenkbar befestigt. Das Blech 11 hat die aus Fig. 7 ersichtliche winklige Form. An dem horizontal wirksamen Winkel des Blechs 11 ist eine Nase 17 ausgebildet, die bei der in Fig. 4 gezeigten anliegenden Stellung des Blechs 11 bzw. der Klappe 13 über die Ausnehmung 14 ragt.

Das Blech 9 drückt, belastet über die Feder 12, auf die Klaue 2 und behindert durch die außermittige Anlenkung der Klaue 2 ein Verschwenken der Klaue 2 entgegen der Transportrichtung T. Wenn die auf die Klaue 2 einwirkende, ein gegen den Uhrzeigersinn gerichtetes Moment ausübende Kraft größer wird als die aufgrund der Hebelgesetze wirksame Druckkraft der Feder 12, schwenkt die Klaue 2 gegen die Transportrichtung T und drückt mit ihrem hinteren Ende 2a das Blech 9 nach oben. Bei dieser Schwenkbewegung kommt die Klaue 2 in Eingriff mit der Nase 17 des Blechs 11 und schwenkt das Blech 11 - unterstützt durch die kurvenförmige Ausbildung der Nase 17 - und die daran befestigte Klappe 13 nach außen.

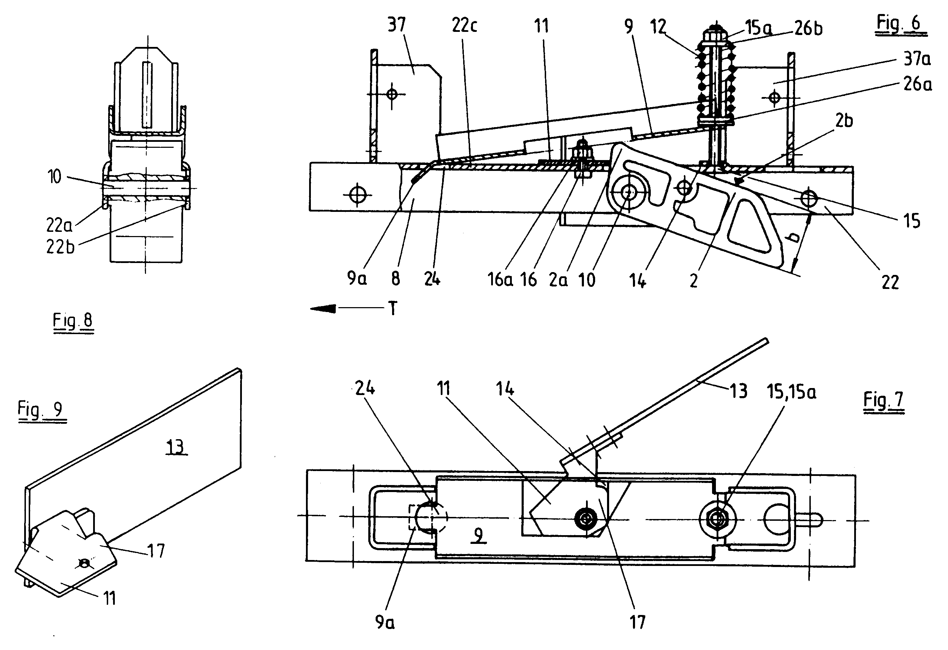

Die hintere Kante 2a der Klaue 2 ist so gerundet und steht über die hintere Fläche 26 so weit hinaus, daß über das Blech 9 eine ebenfalls gegen den Uhrzeigersinn drehende Kraft dann einwirkt, wenn die Klaue 2 so weit nach oben geschwenkt ist, daß die Kante 2a vor den um den Bolzen 10 wirksamen Drehpunkt gelangt (Fig. 6). Dieses Moment hält die Klaue 2 in der dritten Position und verhindert ein Zurückschwenken durch die Gewichtskraft der Klaue 2.

Die die Schwenkbewegung hervorrufende Kraft resultiert von einem im Bereich der Weiche 19 blockierten Förderwagen 1.
Der Ausschieber 8 kann folglich über die hintere Rolle 30 des Förderwagens 1 hinwegfahren, ohne dabei Schaden zu nehmen.

Im Bereich der Weiche 19 ist am Förderstrang 6 eine optische Überwachungseinrichtung 3 vorgesehen. Bei dieser Überwachungseinrichtung 3 kann es sich beispielsweise um einen Laser oder eine herkömmliche Lichtschranke handeln.

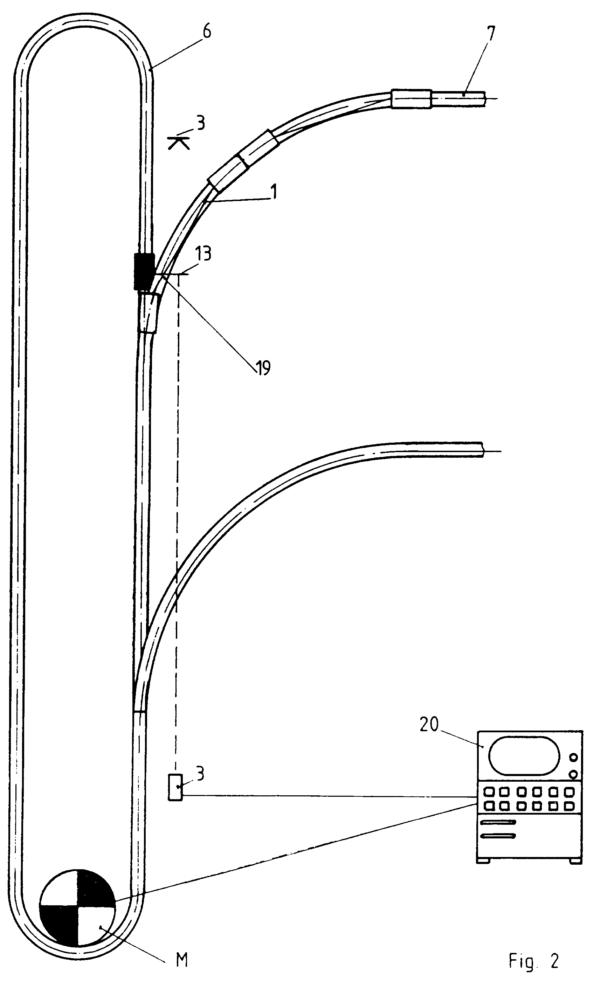

In Fig. 2 ist eine aus einem Strahler und einem Reflektor bestehende Lichtschranke 3 schematisch dargestellt. Diese Überwachungseinrichtung 3 ist so ausgerichtet, daß sie an den Antriebselementen 21 und den Ausschiebern 8 vorbeistrahlt. Wenn, hervorgerufen durch eine Blockade, die Klaue 2 hochschwenkt und dabei die Klappe 13 ausschwenkt, wird der Lichtstrahl der Überwachungseinrichtung 3 unterbrochen und dadurch erkannt, daß ein Förderwagen 1 im Bereich der Weiche 19 nicht weitertransportiert werden kann. Die Überwachungseinrichtung 3 ist mit der Steuereinheit 20 der Hängeförderanlage verbunden. Durch die Unterbrechung des Lichtstrahls wird ein Signal an die Steuereinheit 20 gegeben, das dazu dient, den Antrieb der Förderkette 5 unverzüglich stillzusetzen. Eine Beschädigung der Förderanlage wird dadurch wirkungsvoll ausgeschlossen.

Die nach außen geschwenkte Klappe 13 hilft später dem Wartungspersonal beim Auffinden der Weiche 19, durch die das Signal ausgelöst worden ist.

Anstelle einer optischen Überwachungseinrichtung 3 kann auch ein Mikroschalter in der Nähe der Weiche 19 so angebracht sein, daß er durch die nach außen geschwenkte Klappe 13 betätigt wird. Das Stillsetzen der Förderanlage erfolgt dann mechanisch-elektrisch.

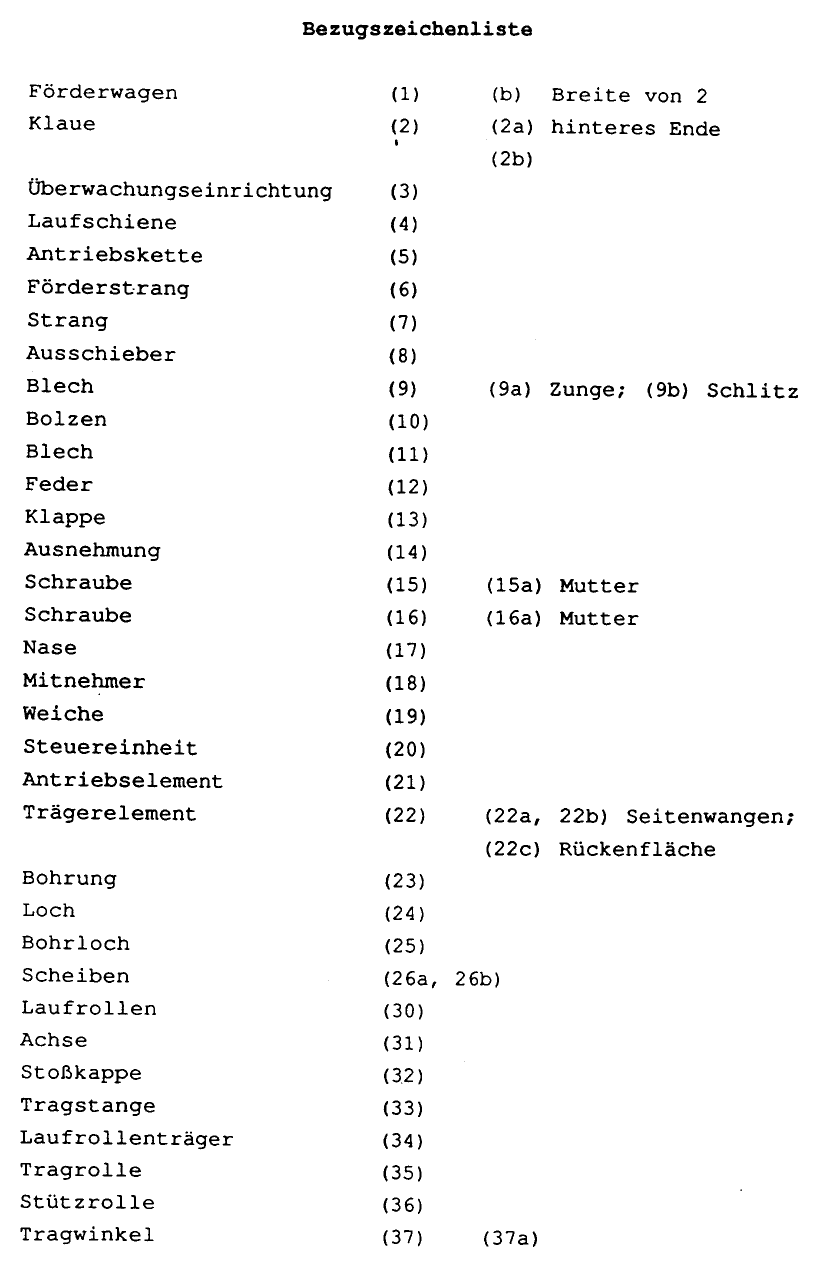

## Patentansprüche

1. Hängeförderanlage mit auf Schienen geführt rollenden Förderwagen (1), insbesondere zum Transport von auf Bügeln hängenden Kleidungsstücken, die einen aus einer Laufschiene (4) und einer oberhalb und parallel hierzu horizontal endlos umlaufenden Antriebskette (5) gebildeten Förderstrang (6) aufweist, mit wenigstens einer Anzweigung in einen weiteren Strang (7), in den die Förderwagen (1) mit Hilfe eines an der Förderkette (5) befestigten, hinter jedem Förderwagen (1) wirksamen Ausschiebers (8) ausgleisbar sind, wobei der Ausschieber (8) aus einer Trägervorrichtung (9) und einer darin an einem Bolzen (10) in einer vertikalen Ebene schwenkbar befestigten Klaue (2) besteht, und für die Klaue (2) eine erste Position (Wirklage) und eine in Transportrichtung (T) hochgeschwenkte zweite Position einnehmbar ist,
**dadurch gekennzeichnet,**
daß für die Klaue (2) eine entgegen der Transportrichtung (T) hochgeschwenkte dritte Position einnehmbar ist.

2. Hängeförderanlage nach Anspruch 1,
**dadurch gekennzeichnet,**
daß die dritte Position gegen die Kraft einer Feder (12) einnehmbar ist.

3. Hängeförderanlage nach Anspruch 1 oder 2,
**dadurch gekennzeichnet,**
daß die Trägervorrichtung (9) eine mechanische Einrichtung (Klappe 13) aufweist, die von der in die dritte Position geschwenkten Klaue (2) aus einer inaktive Stellung in eine aktive Stellung bringbar ist, wobei die aktive Stellung zur Sichtbarmachung der in die dritte Position geschwenkten Klaue (2) dient.

4. Hängeförderanlage nach einem der Ansprüche 1 bis 3,
**dadurch gekennzeichnet,**
daß die Trägervorrichtung (9) oberhalb des Anlenkpunktes der Klaue (2) eine Ausnehmung (14) aufweist, die in der ersten und zweiten Position der Klaue (2) von einem federbelasteten Blech (9) abgedeckt ist, wobei das Blech (9) durch die in die dritte Position schwenkende Klaue (2) hochschwenkbar ist.

5. Hängeförderanlage nach einem oder mehreren der vorstehenden Ansprüche,
**dadurch gekennzeichnet,**
daß an dem Ausschieber (8) am vorderen Ende der Ausnehmung (14) ein in Wirklage der Klaue (2) die Ausnehmung (14) überragendes, die Klappe (13) tragendes Blech (11) horizontal schwenkbar angeordnet ist.

6. Hängeförderanlage nach Anspruch 5,
**dadurch gekennzeichnet,**
daß das Blech (11) eine Nase (17) aufweist, die mit der in die dritte Position schwenkenden Klaue (2) zusammenwirkt.

7. Hängeförderanlage nach einem oder mehreren der vorstehenden Ansprüche,
**dadurch gekennzeichnet,**
daß eine parallel zum Förderstrang (6) wirksame optische Überwachungseinrichtung (3) vorgesehen und so ausgerichtet ist, daß eine ausgeschwenkte Klappe (13) detektiert wird.

8. Hängeförderanlage nach Anspruch 7,
**dadurch gekennzeichnet,**
daß die Überwachungseinrichtung (3) mit der Steuereinheit (20) in Wirkverbindung steht und die Steuereinheit (20) zum Anhalten der Förderkette (5) ein Signal erhält, wenn eine ausgeschwenkte Klappe (13) detektiert wird.

## Claims

1. A suspension conveyor system comprising carriages (1) moving and guided on rails, more especially for conveying articles of clothing on hangers, and comprising a conveyor line (6) made up of a rail (4) and an endless circulating driving chain (5) above and parallel thereto and with at least one branch into another line (7) into which the carriages (1) can be switched by a pusher (8) secured to the chain (5) and operative behind each carriage (1), the pusher (8) comprising a carrier device (9) and a claw (2) secured therein to a pin (10) and pivotable in a vertical plane, the claw (2) being adapted to take up a first position (operative position) and a second position swung up in the conveying direction (T),
**characterised in that**
the claw (2) can occupy a third position swung up in a direction opposite the conveying direction (T).

2. A suspension conveyor system according to claim 1,
**characterised in that**
the third position is occupied against the force of a spring (12).

3. A suspension conveyor system according to claim 1 or 2,
**characterised in that**
the carrier device (9) comprises a mechanical means (flap 13) adapted to be brought from an inactive position to an active position by the claw (2) when pivoted into the third position, the active position being used to show that the claw (2) has been pivoted into the third position.

4. A suspension conveyor system according to any of claims 1 to 3,
**characterised in that**
the carrier device (9), above the pivot point of the claw (2), has a recess (14) which is covered by a spring-loaded plate (9) when the claw (2) is in the first and second position, the plate (9) being pivotable upwards by the claw (2) when pivoting into the third position.

5. A suspension conveyor system according to one or more of the preceding claims,
**characterised in that**
a plate (11) is disposed for horizontal pivoting on the pusher (8) at the front end of the recess (14), the plate bearing the flap (13) and extending over the recess (14) when the claw (2) is in the operative position.

6. A suspension conveyor system according to claim 5,
**characterised in that**
the plate (11) has a lug (17) which co-operates with the claw (2) when pivoting into the third position.

7. A suspension conveyor system according to one or more of the preceding claims,
**characterised in that**
an optical monitoring device (3) operating in parallel with the conveyor line (6) is provided and aligned so that a swung-out flap (13) is detected.

8. A suspension conveyor system according to claim 7,
**characterised in that**
the monitoring device (3) is in operative connection with the control unit (20), and the control unit (20) receives a signal for stopping the conveying chain (5), if a swung-out flap (13) is detected.

## Revendications

1. Système de transport suspendu comportant des chariots transporteurs (1) roulants avec guidage sur des rails, en particulier pour le transport de vêtements suspendus à des cintres, qui présente une voie (6) de transport formée d'un rail de roulement (4) et d'une chaîne d'entraînement (5) tournant sans fin horizontalement au-dessus et parallèlement à celui-ci, au moins une bifurcation vers une autre voie (7), dans laquelle les chariots transporteurs (1) peuvent être déviés au moyen d'un dispositif d'expulsion (8) fixé à la chaîne d'entraînement (5), agissant derrière chaque chariot transporteur (1), le dispositif d'expulsion (8) étant composé d'un dispositif porteur (9) et d'une griffe (2) fixée dans celui-ci à un axe (10) avec possibilité de basculer dans un plan vertical, et la griffe (2) pouvant prendre une première position (position active) et une deuxième position basculée vers le haut selon la direction de transport (T),
caractérisée en ce que la griffe (2) peut prendre une troisième position basculée vers le haut à l'opposé de la direction de transport (T).

2. Système de transport suspendu selon la revendication 1,
caractérisée en ce que la troisième position peut être prise contre la force d'un ressort (12).

3. Système de transport suspendu selon la revendication 1 ou 2,
caractérisée en ce que le dispositif porteur (9) comporte un mécanisme (volet 13) qui peut être amené, par la griffe (2) basculée dans la troisième position, d'une position inactive dans une position active, la position active servant à rendre visible la griffe (2) basculée dans la troisième position.

4. Système de transport selon l'une des revendications 1 à 3,
caractérisée en ce que le dispositif porteur (9) présente, au-dessus du point d'articulation de la griffe (2), une découpe (14) qui, dans la première et la seconde positions de la griffe (2), est recouverte par une tôle (9) chargée par un ressort, la tôle (9) pouvant basculer vers le haut sous l'action de la griffe (2) basculant dans la troisième position.

5. Système de transport suspendu selon l'une ou plusieurs des revendication précédentes,
caractérisée en ce qu'une tôle (11) portant le volet (13) et dépassant en hauteur de la découpe (14) en position active de la griffe (2), est placée avec possibilité de pivoter horizontalement sur le dispositif d'expulsion (8), à l'extrémité avant de la découpe (14).

6. Système de transport suspendu selon la revendication 5, caractérisée en ce que la tôle (11) comporte un nez (17) qui coopère avec la griffe (2) basculant dans la troisième position.

7. Système de transport suspendu selon l'une ou plusieurs des revendications précédentes,
caractérisée en ce qu'une installation de surveillance optique (3) opérant parallèlement à la voie de transport (6) est prévue et est orientée de manière qu'un volet pivoté (13) soit détecté.

8. Système de transport suspendu selon la revendication 7,
caractérisée en ce que l'installation de surveillance (3) est en liaison active avec le dispositif de commande (20) et le dispositif de commande (20) reçoit un signal pour arrêter la chaîne de transport (5) lorsqu'un volet (13) pivoté est détecté.
